# EUROPEAN PATENT APPLICATION

(11) **EP 4 838 901 A1**
(43) Date of publication of application: **11.11.2026**
(21) Application number: 24944199.9
(22) Date of filing: 09.09.2024
(51) Int. Cl.: H04N 23/60

(54) **IMAGE ACQUISITION METHOD AND SYSTEM**

(30) Priority: 24.06.2024 CN 202410825750
(71) Applicant: Contemporary Amperex Technology Co., Limited, Ningde, Fujian 352100 (CN)
(72) Inventor: XUE, Yucong, Ningde, Fujian 352100 (CN); CHEN, Chao, Ningde, Fujian 352100 (CN); MA, Lin, Ningde, Fujian 352100 (CN); CHEN, Zhipeng, Ningde, Fujian 352100 (CN)
(74) Representative: Straus, Alexander
(86) International application number: PCT/CN2024/117821
(87) International publication number: WO 2026/000625

(57) **Abstract**

Embodiments of the present disclosure disclose an image acquisition method and system. The method comprises: receiving a first detection signal sent by a position sensor upon detecting a tab on a coil material; acquiring a first pulse count emitted by an encoder disposed on an unwinding roller within the time between the first detection signal and a second detection signal, wherein the second detection signal is a detection signal sent by the position sensor and temporally adjacent to the first detection signal; on the basis of the first pulse count, a preset weight parameter, and a first distance pulse count, determining a total accumulated pulse count for triggering a camera to perform photography, wherein the weight parameter is used to characterize relative positional information between the position at which the coil material is photographed and a first tab in the winding turn in which the current tab is located, and the first distance pulse count is used to characterize a distance between the camera and the position sensor; and on the basis of the total accumulated pulse count, triggering the camera to photograph the coil material.

## Description

### CROSS-REFERENCE TO RELATED APPLICATIONS

The present disclosure is based on a Chinese patent application with application No. 202410825750.6, filed on June 24, 2024 and entitled "IMAGE ACQUISITION METHOD AND SYSTEM", and claims the priority right of the Chinese patent application, which is incorporated herein by reference in its entirety.

### TECHNICAL FIELD

The present disclosure relates to but is not limited to the field of lithium battery detection, and in particular, to an image acquisition method and system.

### BACKGROUND

Power batteries enjoy increasingly wide applications in daily life and various industries. For example, new energy vehicles equipped with power batteries have been widely used. In addition, batteries are increasingly applied in energy storage and other fields.

In the production process of power batteries, visual inspection of the front and back sides of a coating zone is required. However, a winding device performs winding at a non-uniform winding speed from winding start to winding completion. Triggering a camera to capture images at fixed time intervals allows avoidance of a tab region, but it cannot guarantee that the photographing position for each winding turn of a battery cell at a coil material station is consistent with the photographing position at a winding station, which lowers the reliability of the measured distance between the cathode and the anode of the battery cell (referred to as the cathode-anode distance).

### SUMMARY

In view of this, embodiments of the present disclosure provide at least an image acquisition method and system.

The technical solutions of the embodiments of the present disclosure are implemented as follows:

According to one aspect, an embodiment of the present disclosure provides an image acquisition method, where the method includes: receiving a first detection signal sent by a position sensor upon detecting a tab on a coil material; acquiring a first pulse count obtained from pulses transmitted by an encoder disposed on an unwinding roller within a time interval between the first detection signal and a second detection signal; where the second detection signal is a detection signal sent by the position sensor and temporally adjacent to the first detection signal; determining a total accumulated pulse count for triggering a camera to capture images based on the first pulse count, a preset weight parameter, and a first distance pulse count; where the weight parameter is used to characterize relative positional information between a position at which the coil material is photographed and an initial tab on a winding turn in which a current tab is located; and the first distance pulse count is used to characterize a distance between the camera and the position sensor; and triggering the camera to capture images of the coil material based on the total accumulated pulse count.

In the embodiments of the present disclosure, first, based on the first pulse count determined between two adjacent tabs, the photographing position of the camera may be located between two adjacent tabs, thereby avoiding the tab region during image capture of the coil material; secondly, since the photographing position angle at the winding station is a fixed value, based on the weight parameters obtained from the photographing position angle and the winding turn angle, the relative photographing position on the circumference of one winding turn may be obtained, and then the photographing position at the coil material station that corresponds to the photographing position at the winding station may be obtained, which may solve the problem of positional offset between the photographing position at the winding station and the photographing position at the coil material station. Further, one winding turn is defined between the first detection signal and the second detection signal. By counting the first pulse count obtained from pulses transmitted by the encoder in different winding turns, the scheme may adapt to various winding speeds during image capture of the coil material, thereby eliminating the influence of winding speed on the accuracy of the photographing position.

In some embodiments, the acquiring a first pulse count obtained from pulses transmitted by an encoder disposed on an unwinding roller within a time interval between the first detection signal and a second detection signal includes: determining a first pulse sequence number corresponding to pulses transmitted by the encoder when the first detection signal is sent; acquiring a second pulse sequence number corresponding to pulses transmitted by the encoder when the second detection signal is sent; and determining a pulse count between the first pulse sequence number and the second pulse sequence number as the first pulse count.

In the above embodiments, while the encoder transmits pulse signals, the image controller sequentially counts the received pulse signals, so that the first pulse sequence number corresponding to the first detection signal and the second pulse sequence number corresponding to the second detection signal may be obtained, and then the first pulse count may be determined based on the first pulse sequence number and the second pulse sequence number, so as to determine the total accumulated pulse count according to the first pulse count determined based on the first pulse sequence number and the second pulse sequence number.

In some embodiments, the method further includes: establishing a mapping relationship between the first detection signal and the first pulse sequence number, and storing the mapping relationship in a storage region in an image acquisition system at an unwinding station.

In the above embodiments, a mapping relationship is established between the detection signal and the corresponding pulse sequence number, and the mapping relationship is then stored in a corresponding storage region. In this way, after the first detection signal is received, the second pulse sequence number corresponding to the second detection signal may be obtained from the storage region.

In some embodiments, the determining a total accumulated pulse count for triggering a camera to capture images based on the first pulse count, a preset weight parameter, and a first distance pulse count includes: taking a product of the first pulse count and the weight parameter as a second pulse count; the second pulse count is a pulse count corresponding to a distance between a next photographing position of the camera and an initial tab on a winding turn in which a current tab is located; taking a difference between the second pulse count and the first pulse count as a third pulse count; where the third pulse count is a pulse count corresponding to a distance between the position sensor and the next photographing position; and determining a sum of the first distance pulse count and the third pulse count as the total accumulated pulse count for triggering the camera to capture images.

In the above embodiments, taking the product of the first pulse count and the weight parameter as the second pulse count may obtain the pulse count corresponding to the distance between the next photographing position of the camera and the current tab. Next, taking a difference between the second pulse count and the first pulse count as a third pulse count may obtain the pulse count corresponding to a distance between the position sensor and the next photographing position. Finally, the sum of the first distance pulse count and the third pulse count is determined as the total accumulated pulse count, so that the camera is triggered to capture images of the coil material based on the total accumulated pulse count.

In some embodiments, the method further includes: determining a tab span between two adjacent tabs in a battery cell to be generated based on the first pulse count obtained from pulses transmitted by the encoder, a circumference of the unwinding roller, and a second distance pulse count; where the second distance pulse count is a quantity of pulse signals generated by the encoder when the unwinding roller rotates one revolution; and the tab span is used to control the camera to photograph the battery cell to be generated.

In the above embodiments, a rotation quantity of the unwinding roller for one winding turn may be determined based on a ratio of the first pulse count between two adjacent tabs to the second distance pulse count, and the tab span between two adjacent tabs in the battery cell to be generated is determined by multiplying the rotation quantity by the circumference of the unwinding roller. Thus, during analysis of captured images, the tab span is associated with an image acquired by the camera to determine a photographing position of the image acquired by the camera on the coil material, so as to realize analysis of the coil material.

In some embodiments, the first distance pulse count is greater than S times a first pulse count threshold, the first pulse count threshold is a pulse count corresponding to a tab span between an initial tab and an adjacent next tab, and S is a real number greater than 1.

In the above embodiments, the first distance pulse count is set to be greater than S times the pulse count corresponding to the tab span between the initial tab and the adjacent next tab, which is used to increase the accumulated pulse count for camera control to eliminate the influence of the response delay of the camera taking a picture after receiving a photographing signal, thereby realizing that the camera is triggered to capture images at position corresponding to the photographing position at the winding station under different winding speeds.

In some embodiments, the method further includes: acquiring a photographing position angle of a camera at a winding station; where the winding station is disposed downstream at the unwinding station along a transmission direction of the coil material; and determining a quotient of the photographing position angle and a circumferential angle as the weight parameter.

In the above embodiments, the quotient of the photographing position angle of the camera at the winding station and the circumferential angle is determined as the weight parameter, so that the total accumulated pulse count for triggering the camera to capture images of the coil material may be obtained based on the weight parameter, thereby realizing that the photographing position of the image at the unwinding station is consistent with the photographing position of the image at the winding station, and improving the reliability of the distance measurement between the cathode and the anode of the battery cell.

In some embodiments, under a condition that the battery cell to be generated is of a single-turn multi-tab type, the second detection signal is a detection signal sent by the position sensor and corresponding to a quantity of tabs of the first detection signal.

In the above embodiments, under a condition that the battery cell to be generated is of a single-turn multi-tab type, the second detection signal is a detection signal sent by the position sensor and corresponding to a quantity of tabs of the first detection signal. As a result, under the condition that the battery cell is of a single-turn multi-tab type, the quantity of photographing times at the unwinding station is consistent with the quantity of photographing times at the winding station.

According to another aspect, an embodiment of the present disclosure provides an image acquisition system applied to an unwinding station, where the image acquisition system applied to the unwinding station includes an encoder, a position sensor, a camera, and an image acquisition controller; where
the encoder is configured to transmit pulse signals when an unwinding roller moves;
the position sensor is configured to send a first detection signal to the image acquisition controller upon detecting a tab on a coil material;
the camera is configured to capture images of the coil material after receiving a photographing signal sent by the image acquisition controller; and
the image acquisition controller is configured to receive a first detection signal sent by the position sensor upon detecting a tab on a coil material; acquire a first pulse count obtained from pulses transmitted by an encoder disposed on an unwinding roller within a time interval between the first detection signal and a second detection signal; where the second detection signal is a detection signal sent by the position sensor and temporally adjacent to the first detection signal; determine a total accumulated pulse count for triggering a camera to capture images based on the first pulse count, a preset weight parameter, and a first distance pulse count; where the weight parameter is used to characterize relative positional information between a position at which the coil material is photographed and an initial tab on a winding turn in which a current tab is located; and the first distance pulse count is used to characterize a distance between the camera and the position sensor; and trigger the camera to capture images of the coil material based on the total accumulated pulse count.

In some embodiments, the image acquisition controller is further configured to determine a first pulse sequence number corresponding to pulses transmitted by the encoder when the first detection signal is sent; acquire a second pulse sequence number corresponding to pulses transmitted by the encoder when the second detection signal is sent; and determine a pulse count between the first pulse sequence number and the second pulse sequence number as the first pulse count.

In some embodiments, the image acquisition controller is further configured to take a product of the first pulse count and the weight parameter as a second pulse count; the second pulse count is a pulse count corresponding to a distance between a next photographing position of the camera and an initial tab on a winding turn in which a current tab is located; take a difference between the second pulse count and the first pulse count as a third pulse count; where the third pulse count is a pulse count corresponding to a distance between the position sensor and the next photographing position; and determine a sum of the first distance pulse count and the third pulse count as the total accumulated pulse count for triggering the camera to capture images.

In some embodiments, the image acquisition controller is further configured to determine a tab span between two adjacent tabs in a battery cell to be generated based on the first pulse count obtained from pulses transmitted by the encoder, a circumference of the unwinding roller, and a second distance pulse count; where the second distance pulse count is a quantity of pulse signals generated by the encoder when the unwinding roller rotates one revolution; and the tab span is used to control the camera to photograph the battery cell to be generated.

In some embodiments, the image acquisition controller is further configured to acquire a photographing position angle of a camera at a winding station; where the winding station is disposed downstream at the unwinding station along a transmission direction of the coil material; and determine a quotient of the photographing position angle and a circumferential angle as the weight parameter.

It should be understood that the foregoing general description and the next detailed description are merely exemplary and explanatory, and shall not limit the technical solutions of the present disclosure.

### BRIEF DESCRIPTION OF DRAWINGS

The accompanying drawings herein are incorporated into the specification and constitute a part of the specification. These drawings show embodiments consistent with the present disclosure and are used together with the specification to explain the technical solutions of the present disclosure.
FIG. 1 is a schematic diagram of a photographing position at an unwinding station in the related art according to an embodiment of the present disclosure;
FIG. 2 is a schematic diagram of an image acquisition system at an unwinding station according to an embodiment of the present disclosure;
FIG. 3A is a schematic flowchart of implementing an image acquisition method according to an embodiment of the present disclosure;
FIG. 3B is a schematic diagram of photographing positions at an unwinding station and a winding station according to an embodiment of the present disclosure;
FIG. 4A is a schematic flowchart of implementing an image acquisition method for a single-turn multi-tab according to an embodiment of the present disclosure;
FIG. 4B is a schematic diagram of a single-turn multi-tab according to an embodiment of the present disclosure;
FIG. 4C is a schematic diagram of a photographing position of a single-turn multi-tab according to an embodiment of the present disclosure; and
FIG. 5 is a schematic diagram of an image acquisition system at an unwinding station that adopts a PLC as an image acquisition controller according to an embodiment of the present disclosure.

### DESCRIPTION OF EMBODIMENTS

In order to make the purpose, technical solutions, and advantages of the present disclosure clearer, the technical solutions of the present disclosure are further elaborated below with reference to the accompanying drawings and embodiments. The described embodiments shall not be construed as limitations of the present disclosure. All other embodiments obtained by those of ordinary skill in the art without creative labor fall within the protection scope of the present disclosure.

In the following description, references made to "some embodiments" describe a subset of all possible embodiments. It should be understood that "some embodiments" refer to identical or different subsets of all possible embodiments, and may be combined with each other without conflict.

It should be noted that the terms "first\second\third" involved in the embodiments of the present disclosure are merely intended to distinguish similar objects and do not denote any specific sequence of these objects. It may be understood that "first\second\third" may be interchanged with a specific order or sequence if permitted, so that the embodiments of the present disclosure described herein may be implemented in an order other than those illustrated or described herein.

Those skilled in the art will appreciate that, unless otherwise defined, all terms (including technical terms and scientific terms) used herein carry the same meanings as those commonly understood by those of ordinary skill in the art to which the embodiments of the present disclosure pertain. It should also be understood that terms such as those defined in a general dictionary shall be interpreted to have meanings consistent with their meanings in the context of the prior art, and shall not be construed with idealized or overly formal connotations absent specific definitions set forth herein.

Currently, power batteries enjoy increasingly wide applications in daily life and various industries. Power batteries are not only used in energy storage power systems such as hydropower stations, thermal power stations, wind power stations, and solar power stations, but are also widely adopted in electric transportation vehicles such as electric bicycles, electric motorcycles, and electric vehicles, as well as in many fields such as aerospace. As the application field of power batteries keeps expanding, the market demand for power batteries continues to grow.

In the embodiments of the present disclosure, a power battery may be a battery cell (sometimes also referred to as a single battery). A battery may also be a battery module or a battery pack including a plurality of battery cells. A battery cell refers to a basic unit capable of bidirectional conversion between chemical energy and electric energy, and may be used to make a battery module or a battery pack to supply power to an electrical device. The battery cell may be a secondary battery. A secondary battery is a battery cell that may be reused by activating active materials through charging after the battery cell is discharged. For example, the battery cell may be a lithium-ion battery, a sodium-ion battery, a sodium-lithium ion battery, a lithium metal battery, a sodium metal battery, a lithium sulfur battery, a magnesium-ion battery, a nickel hydrogen battery, a nickel cadmium battery, a lead-acid battery, or the like. The embodiments of the present disclosure are not limited thereto.

In the production process of power batteries, visual inspection of the front and back sides of the coating zone is required, which covers inspection of the coating zone offset, measurement of the distance between the cathode and the anode of a battery cell, and the like. Generally, line -scan or area - scan cameras are generally adopted for image capture. However, a winding device performs winding at a non-uniform winding speed from winding start to winding completion. Using a sensor to detect tabs and setting a fixed time interval to trigger the camera to capture images allows avoidance of a tab region, but it cannot guarantee that the photographing position for each welding turn of a current battery cell to be generated at the unwinding station is consistent with the photographing position at the winding station, resulting in a positional offset between the photographing position at the unwinding station and the photographing position at the winding station, which in turn lowers the reliability of the measured distance between the cathode and the anode of the battery cell.

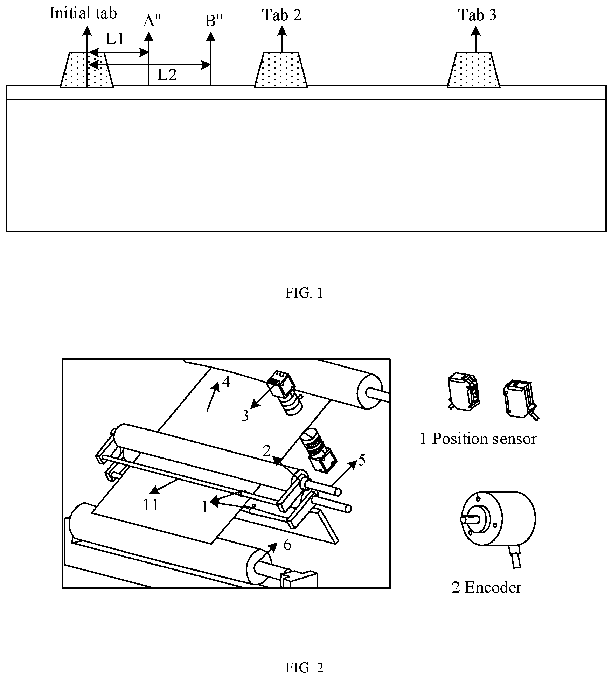

FIG. 1 is adopted to illustrate a positional offset between fixed-distance photographing positions at the unwinding station and the photographing positions at the winding station. As shown in FIG. 1, FIG. 1 is a schematic diagram of photographing positions at the unwinding station for a current battery cell to be generated, which includes an initial tab, a tab 2, and a tab 3, and one winding turn is defined between the initial tab and the tab 2. After a sensor detects a tab, a camera is controlled to capture two images. The photographing positions of the camera are determined by setting a fixed distance L1 and a fixed distance L2 measured from the preceding tab for each winding turn at the unwinding station. Taking the winding turn between the initial tab and the tab 2 as an example, after the initial tab is detected, the pulse counter accumulates pulses until reaching the pulse quantities corresponding to the fixed distance L1 and the fixed distance L2 respectively, and then sends a control signal to the camera to trigger the camera to capture images. The corresponding photographing positions of the camera on the current winding turn are position A" and position B". The photographing position at the winding station is determined by a fixed angle. Since different winding turns have different circumferences, the photographing positions corresponding to the same fixed angle at the winding station vary from turn to turn. The photographing positions at the unwinding station are realized by a fixed distance, and the photographing positions remain identical for every winding turn at the unwinding station. Therefore, a positional offset exists between the photographing position at the unwinding station and the photographing position at the winding station.

In the related art, a photoelectric sensor is mounted on a winding device, and internal parameters of a camera are configured to implement image capture of a target region. When the photoelectric sensor detects a tab, it outputs one pulse signal to initiate control of an industrial camera for capturing two shots, where the two shots are triggered with a fixed time interval ΔT. This may automatically avoid the tab region, control the industrial camera to capture, and complete the shooting and inspection of the target region. However, this solution has the following defects:
(1). By setting a fixed photographing interval, the camera is controlled to capture two shots between two tabs. However, since the winding process proceeds at a non-uniform speed, this solution cannot adapt to different winding speeds.
(2). The scheme cannot set different photographing positions based on different tab-to-tab distances, and therefore cannot be used for inspecting the coating zone offset in scenarios where tabs are protruding or multiple tabs form one winding turn of a battery cell.
(3). Corresponding photographing positions on each winding turn cannot be configured for different winding turn counts. Each layer of the current battery cell has a distinct circumference, creating positional offset between the inspection positions at the unwinding station and the inspection positions at the winding station (the winding station triggers the camera to capture images by rotating the winding needle by a fixed angle). As a winding thickness of the battery cell to be generated rises, the offset between the inspection positions at the unwinding station and the inspection positions at the winding station gradually increases. Thus, when the distance between the cathode and the anode obtained by manual measurement is used as a reference, the distance between the cathode and the anode obtained by the camera is evaluated, resulting in a low evaluation pass rate of the distance between the cathode and the anode obtained by the camera, and further, under a condition of a low evaluation pass rate, the reliability of the distance between the cathode and the anode of the battery cell determined by the camera decreases.

Next, a schematic diagram of the mounting of some devices of the image acquisition system at the unwinding station is introduced. As shown in FIG. 2, the image acquisition system includes a position sensor 1, an encoder 2, a camera 3, a coil material 4, an unwinding roller 5, and a fixed roller 6. A bracket 11 is mounted on the unwinding roller 5, and the position sensor 1 is mounted on the bracket 11 to identify a tab through a pulse signal transmitted by the position sensor 1 when the tab passes. The encoder 2 is mount on the unwinding roller 5 to transmit pulse signals when the unwinding roller 5 moves. The camera 3 is configured to capture images of the coil material 4 after receiving a photographing signal.

In some implementations, the position sensor 1 is mounted at a position capable of detecting the passage of a tab, so that the pulse signal transmitted by the position sensor may enable tab detection based on pulse signal feedback when the tab passes. The position sensor 1 may be a through-beam sensor or a reflective sensor.

In some implementations, the position sensor 1 may be a through-beam sensor. When a tab passes the inspection position of the sensor, the tab blocks pulse signals transmitted by a transmitter of the through-beam sensor. When a receiver of the through-beam sensor fails to receive corresponding pulse signals, it is determined that a tab has passed the inspection position.

In some implementations, the position sensor 1 may be a reflective sensor. When a tab passes the inspection position of the sensor, the tab reflects pulse signals transmitted by the reflective sensor back to the reflective sensor. When the reflective sensor receives reflected pulse signals, it is determined that a tab has passed the inspection position.

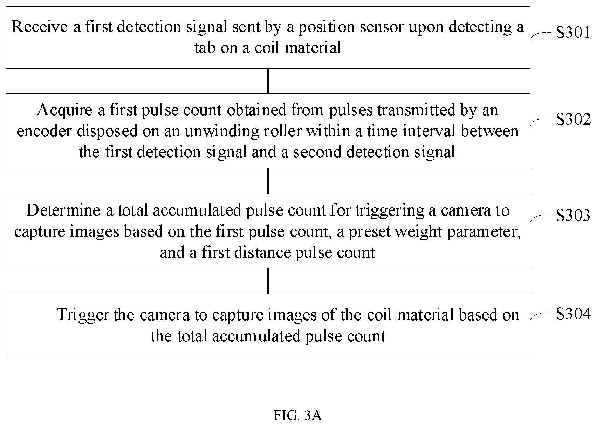

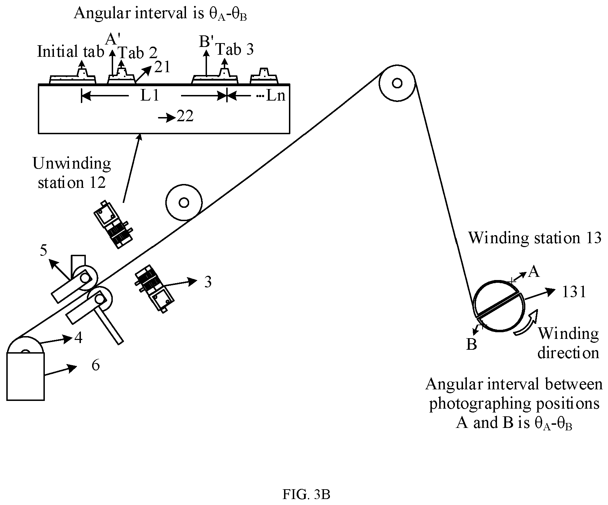

An embodiment of the present disclosure provides an image acquisition method. As shown in FIG. 3, the method may include step S301 to step S304.

Step S301: Receive a first detection signal sent by a position sensor upon detecting a tab on a coil material.

Herein, the image acquisition method is applied to an image acquisition controller at an unwinding station. The image acquisition controller may be a PLC (programmable logic controller, Programmable Logic Controller) or may be a visual host computer. The unwinding station is a station for unwinding raw materials (such as electrode sheets and separators) at a certain speed and precision to support next processes such as coating, winding, or stacking. A position sensor is a sensor used to detect whether an object has reached a target position and output a signal. A tab is a metal conductor for leading out the positive and negative electrodes from a battery cell.

In some implementations, when the position sensor determines that a tab has passed the inspection position, the position sensor sends a first detection signal to the image acquisition controller at the unwinding station, and the first detection signal is used to indicate that a tab is detected.

Step S302: Acquire a first pulse count obtained from pulses transmitted by an encoder disposed on an unwinding roller within a time interval between the first detection signal and a second detection signal;
where the second detection signal is a detection signal sent by the position sensor and temporally adjacent to the first detection signal.

Herein, an encoder is a sensor device that converts physical signals (such as rotation angle and linear displacement) into electrical signals (such as pulses and codes). The second detection signal is a detection signal temporally adjacent to the first detection signal, and the second detection signal may be a detection signal before the first detection signal or a detection signal after the first detection signal. The first pulse count refers to a quantity of pulse signals transmitted by the encoder between the first detection signal sent by the position sensor and the second detection signal sent by the position sensor.

It should be noted that temporally adjacent detection signals are relatively described with respect to the quantity of tabs in one winding turn formed by the winding device. The quantity of tabs in a winding turn may include single-turn single-tab and single-turn multi-tab.

A single-turn single-tab means that one winding turn may be formed between two adjacent tabs. For example, a distance between tab 1 and tab 2 corresponds to one winding turn, and a distance between tab 2 and tab 3 corresponds to one winding turn. Accordingly, the detection signal of tab 1 is adjacent to the detection signal of tab 2, and the detection signal of tab 2 is adjacent to the detection signal of tab 3.

A single-turn multi-tab means that one winding turn may be formed among multiple tabs. Multiple tabs may be understood as more than two tabs, such as two tabs, three tabs, and four tabs. When the quantity of tabs is 2, a distance between tab 1 and tab 3 corresponds to one winding turn, and a distance between tab 3 and tab 5 corresponds to one winding turn. Accordingly, the detection signal of tab 1 is adjacent to the detection signal of tab 3, and the detection signal of tab 3 is adjacent to the detection signal of tab 5.

In some implementations, the image acquisition controller takes the first detection signal as a first timestamp and the second detection signal as a second timestamp to determine a quantity of pulse signals transmitted by the encoder between the first timestamp and the second timestamp.

In some implementations, a single-turn single-tab is described. Under a condition that the second detection signal is a detection signal before the first detection signal, first, upon receiving the first detection signal, a storage region in the image acquisition controller that stores detection signals is searched to determine whether a detection signal is stored in the storage region. When it is determined that a detection signal is stored, the detection signal stored at the previous moment may be obtained, and the obtained detection signal is used as the second detection signal.

In some implementations, a single-turn single-tab is described. Under a condition that the second detection signal is a detection signal after the first detection signal, first, upon receiving the first detection signal, a storage region in the image acquisition controller that stores detection signals is searched to determine whether a detection signal is stored in the storage region. When it is determined that no detection signal is stored, a detection signal sent after the position sensor detects another tab is waited for, and the received detection signal is used as the second detection signal.

In some implementations, a single-turn multi-tab is described. Under a condition that the second detection signal is a detection signal before the first detection signal, first, upon receiving the first detection signal, a storage region in the image acquisition controller that stores detection signals is searched to determine whether a detection signal is stored in the storage region. When it is determined that a detection signal is stored, the detection signal stored at a moment before a corresponding quantity of tabs may be obtained, and the obtained detection signal is used as the second detection signal.

For example, when the quantity of tabs is 2, upon receiving the first detection signal, the detection signals of the first two moments in the corresponding storage region are searched. For example, if a pulse sequence number corresponding to the first detection signal in the storage region is 5, a pulse sequence number corresponding to the second detection signal in the storage region shall be 3. Therefore, the detection signal with pulse sequence number 3 is the second detection signal.

In some implementations, a single-turn multi-tab is described. Under a condition that the second detection signal is a detection signal after the first detection signal, first, upon receiving the first detection signal, a storage region in the image acquisition controller that stores detection signals is searched to determine whether a detection signal is stored in the storage region. When it is determined that no detection signal is stored, a detection signal sent after the position sensor detects another corresponding quantity of tabs is waited for, and the received detection signal is used as the second detection signal.

For example, when the quantity of tabs is 2, upon receiving the first detection signal, the detection signal after the position sensor receives two tabs is waited for. For example, if a pulse sequence number corresponding to the first detection signal in the storage region is 7, a pulse sequence number corresponding to the received second detection signal in the storage region shall be 9. Therefore, the detection signal with pulse sequence number 9 is the second detection signal.

Step S303: Determine a total accumulated pulse count for triggering a camera to capture images based on the first pulse count, a preset weight parameter, and a first distance pulse count;
where the weight parameter is used to characterize relative positional information between a position at which the coil material is photographed and an initial tab on a winding turn in which a current tab is located; and the first distance pulse count is used to characterize a distance between the camera and the position sensor.

Herein, the weight parameter is determined based on the photographing position angle of the camera at the winding station.

In some implementations, the distance between the camera and the position sensor may be obtained first, and the obtained distance is then converted into a corresponding pulse count.

During implementation, the distance between the camera and the position sensor is obtained first, a value obtained by dividing the distance between the camera and the position sensor by the circumference of the unwinding roller is then determined as a distance weight value, and finally a value obtained by multiplying the distance weight value by the second distance pulse count is determined as the first distance pulse count.

It should be noted that the distance between a position at which the coil material is photographed and the initial tab on the winding turn in which the current tab is located may be determined based on the weight parameter. The initial tab on the winding turn may be understood as the first tab in the process of forming the winding turn. For example, if a distance between tab 1 and tab 2 corresponds to one winding turn, the initial tab serves as tab 1; and if a distance between tab 1 and tab 3 corresponds to one winding turn, the initial tab serves as tab 1.

Step S304: Trigger the camera to capture images of the coil material based on the total accumulated pulse count.

Herein, an area-scan camera is selected because it is a camera capable of acquiring an image in one exposure and performing image acquisition in a timely manner, and it may acquire images in a frame-based manner and has the advantage of intuitive images for measurement.

In some implementations, when the total pulse count accumulated by the pulse counter is equal to the total accumulated pulse count, a photographing signal is sent to the camera, and the camera captures images of the coil material after receiving the photographing signal.

In the embodiments of the present disclosure, first, based on the first pulse count determined between two adjacent tabs, the photographing position of the camera may be located between two adjacent tabs, thereby avoiding the tab region during image capture of the coil material; secondly, since the photographing position angle at the winding station is a fixed value, based on the weight parameters obtained from the photographing position angle and the winding turn angle, the relative photographing position on the circumference of one winding turn may be obtained, and then the photographing position at the coil material station that corresponds to the photographing position at the winding station may be obtained, which may solve the problem of positional offset between the photographing position at the winding station and the photographing position at the unwinding station. Further, one winding turn is defined between the first detection signal and the second detection signal. By counting the first pulse count obtained from pulses transmitted by the encoder in different winding turns, the scheme may adapt to various winding speeds during image capture of the coil material, thereby eliminating the influence of winding speed on the accuracy of the photographing position.

In some embodiments, the foregoing step S302 of acquiring a first pulse count obtained from pulses transmitted by an encoder disposed on an unwinding roller within a time interval between the first detection signal and the second detection signal may include step S3021 to step S3023:

Step S3021: Determine a first pulse sequence number corresponding to pulses transmitted by the encoder when the first detection signal is sent.

In some implementations, the image acquisition controller assigns sequence numbers to each pulse signal sent by the encoder, and stores sequence numbers.

In some implementations, after the first detection signal is obtained, the first detection signal is taken as a timestamp, and the image acquisition controller accesses the storage region for the pulse sequence numbers of the encoder, determines the pulse sequence number corresponding to the pulse signal transmitted by the encoder when the first detection signal is sent, and takes the obtained pulse sequence number as the first pulse sequence number.

Step S3022: Acquire a second pulse sequence number corresponding to pulses transmitted by the encoder when the second detection signal is sent.

Herein, the second pulse sequence number may be a pulse sequence number less than the first pulse sequence number, or may be a pulse sequence number greater than the first pulse sequence number. The second pulse sequence number being less than the first pulse sequence number is because the second detection signal sent by the position sensor is a detection signal before the first detection signal, and the second pulse sequence number being greater than the first pulse sequence number is because the second detection signal sent by the position sensor is a detection signal after the first detection signal.

In some implementations, after the second detection signal is obtained, the second detection signal is taken as a timestamp, and the image acquisition controller accesses the storage region for the pulse sequence numbers of the encoder, determines the pulse sequence number corresponding to the pulse signal transmitted by the encoder when the second detection signal is sent, and takes the obtained pulse sequence number as the second pulse sequence number.

Step S3023: Determine a pulse count between the first pulse sequence number and the second pulse sequence number as the first pulse count.

In some implementations, a first difference between the first pulse sequence number and the second pulse sequence number is first calculated, and then 1 is added to the difference to obtain the first pulse count.

For example, if the first pulse sequence number is 1256 and the second pulse sequence number is 1600, the pulse count between the first pulse sequence number and the second pulse sequence number is 345.

In the above embodiments, while the encoder transmits pulse signals, the image controller sequentially counts the received pulse signals, so that the first pulse sequence number corresponding to the first detection signal and the second pulse sequence number corresponding to the second detection signal may be obtained, and then the first pulse count may be determined based on the first pulse sequence number and the second pulse sequence number, so as to determine the total accumulated pulse count according to the first pulse count determined based on the first pulse sequence number and the second pulse sequence number.

In some embodiments, the foregoing step S302 further includes: establishing a mapping relationship between the first detection signal and the first pulse sequence number, and storing the mapping relationship in a storage region in the image acquisition controller at the unwinding station.

In some implementations, a mapping relationship between the first detection signal and the first pulse sequence number may be established in the form of a key-value pair, where the first detection signal may serve as the key in the key-value pair, and the first pulse sequence number may serve as the value in the key-value pair.

In some implementations, after receiving a detection signal sent when a tab detected by the position sensor is received, a pulse sequence number of the detection signal is determined, and then the detection signal and the corresponding pulse sequence number are sequentially stored in a storage region in the image acquisition controller in the form of a key-value pair.

In some implementations, the mapping relationship between the first detection signal and the first pulse sequence number may be stored in a data table in the image acquisition controller or in a buffer region in the image acquisition controller.

In the above embodiments, a mapping relationship is established between the detection signal and the corresponding pulse sequence number, and the mapping relationship is then stored in a corresponding storage region. In this way, after the first detection signal is received, the second pulse sequence number corresponding to the second detection signal may be obtained from the storage region.

In some embodiments, the foregoing step S303 of determining a total accumulated pulse count for triggering a camera to capture images based on the first pulse count, a preset weight parameter, and a first distance pulse count may include step S3030 to step S3032:

Step S3030: Take a product of the first pulse count and the weight parameter as a second pulse count; where the second pulse count is a pulse count corresponding to a distance between a next photographing position of the camera and an initial tab on a winding turn in which a current tab is located.

Herein, the product of the first pulse count and the weight parameter may be an integer or a decimal.

In some implementations, when the product is an integer, the product is determined as the second pulse count; when the product is a decimal, the product needs to be rounded first, and the processed product is determined as the second pulse count, where the rounding process may be rounding the product to the nearest integer, truncating decimal digits in the product directly, or incrementing the integer part in the product by one before truncating all decimal digits.

In some implementations, the distance between the next photographing position of the camera and the current tab may be determined based on the second pulse count.

Step S3031: Take a difference between the second pulse count and the first pulse count as a third pulse count;
where the third pulse count is a pulse count corresponding to a distance between the position sensor and the next photographing position;
In some implementations, the distance between the position sensor and the next photographing position may be determined based on the third pulse count.

Step S3032: Determine a sum of the first distance pulse count and the third pulse count as the total accumulated pulse count for triggering the camera to capture images.

In some implementations, the photographing position of the camera on the coil material may be determined based on the total accumulated pulse count.

In the above embodiments, taking the product of the first pulse count and the weight parameter as the second pulse count may obtain the pulse count corresponding to the distance between the next photographing position of the camera and the current tab. Next, taking the difference between the second pulse count and the first pulse count as the third pulse count may obtain the pulse count corresponding to the distance between the position sensor and the next photographing position. Finally, the sum of the first distance pulse count and the third pulse count is determined as the total accumulated pulse count, so that the camera is triggered to capture images of the coil material based on the total accumulated pulse count.

In some embodiments, the image acquisition method further includes step S305.

Step S305: Determine a tab span between two adjacent tabs in a battery cell to be generated based on the first pulse count obtained from pulses transmitted by the encoder, a circumference of the unwinding roller, and a second distance pulse count;
where the second distance pulse count is a quantity of pulse signals generated by the encoder when the unwinding roller rotates one revolution; and the tab span is used to control the camera to photograph the battery cell to be generated.

Herein, the tab span may be a distance between two adjacent tabs on the same side corresponding to a quantity of winding turns, where for a single-turn single-tab, the tab span may be a distance between tab 1 and tab 2, or a distance between tab 3 and tab 4; for a single-turn multi-tab, when the quantity of tabs is 2, the tab span may be a distance between tab 1 and tab 3, or a distance between tab 3 and tab 5.

In some implementations, a diameter of the unwinding roller may be obtained first, and then the circumference of the unwinding roller is calculated. For example, if the diameter of the unwinding roller is φ, the circumference of the unwinding roller is πφ.

In some implementations, the first pulse count is multiplied by the circumference of the unwinding roller and then divided by the second distance pulse count to obtain the tab span between two adjacent tabs on the same side in the battery cell to be generated.

In some implementations, when the unwinding roller starts to rotate, the pulse signals transmitted by the encoder are counted. When the unwinding roller stops rotating, the counting of the pulse signals transmitted by the encoder is ended, and the final count value is determined as the second distance pulse count.

In some implementations, the moment when the unwinding roller starts to rotate is taken as a third timestamp, a third pulse sequence number of the pulse signal of the encoder at that timestamp is determined, the moment when the unwinding roller ends rotating is taken as a fourth timestamp, a fourth pulse sequence number of the pulse signal at that timestamp is determined, a second difference between the fourth pulse sequence number and the third pulse sequence number is determined, and then 1 is added to the difference to obtain the second distance pulse count.

In some implementations, a photographing position of the camera at the unwinding station on the coil material is determined based on the tab span, a length of the position sensor from the camera in a coil material transport direction, and a photographing position angle of the camera at the winding station.

In the above embodiments, a rotation quantity of the unwinding roller for one winding turn may be determined based on a ratio of the first pulse count between two adjacent tabs to the second distance pulse count, and the tab span between two adjacent tabs in the battery cell to be generated is determined by multiplying the rotation quantity by the circumference of the unwinding roller. Thus, during analysis of captured images, the tab span is associated with an image acquired by the camera to determine a photographing position of the image acquired by the camera on the coil material, so as to realize analysis of the coil material.

In some embodiments, the first distance pulse count is greater than S times a first pulse count threshold, the first pulse count threshold is a pulse count corresponding to a tab span between an initial tab and an adjacent tab, S is a real number greater than 1, and the first distance pulse count is an integer.

Herein, the initial tab is the first tab of the battery cell to be generated. S is a real number greater than 1, for example, S takes a value of 1.33, S takes a value of 2, and S takes a value of 4.

In some implementations, when S takes a decimal value, S times the first pulse count threshold may be a decimal or an integer. When S times the first pulse count threshold is a decimal, it needs to be rounded, where the rounding process may be rounding S times the first pulse count threshold to the nearest integer, or directly truncating all decimal digits in S times the first pulse count threshold, or incrementing the integer part in S times the first pulse count threshold by one before truncating all decimal digits.

It should be noted that the tab span between the initial tab and the adjacent next tab refers to the innermost turn of the battery cell to be generated during the process in which the winding device winds the coating material. The adjacent next tab is relatively described based on the quantity of tabs in one winding turn formed by the winding device.

For example, for a single-turn single-tab, for example, the distance between tab 1 (that is, the initial tab) and tab 2 corresponds to one winding turn, and the distance between tab 2 and tab 3 corresponds to one winding turn. Accordingly tab 2 is the adjacent next tab of tab 1, and tab 3 is the adjacent next tab of tab 2.

For a single-turn multi-tab, for example, when the quantity of tabs is 2, a distance between tab 1 and tab 3 corresponds to one winding turn, and a distance between tab 3 and tab 5 corresponds to one winding turn. Accordingly tab 3 is the adjacent next tab of tab 1, and tab 5 is the adjacent next tab of tab 3.

In some implementations, the tab span may be compared with a preset inner turn length, and when the tab span is equal to the inner turn length, the first tab among the adjacent tabs corresponding to the tab span is determined as the initial tab.

In the above embodiments, the first distance pulse count is set to be greater than S times the pulse count corresponding to the tab span between the initial tab and the adjacent next tab, which is used to increase the accumulated pulse count for controlling the camera to eliminate the influence of the response delay of the camera taking a picture after receiving a photographing signal, thereby realizing that images at positions corresponding to the photographing position at the winding station are acquired under different winding speeds.

In some embodiments, the method for determining the weight parameter in the foregoing step S303 may include step S3033 and step S3034:
Step S3033: Acquire a photographing position angle of a camera at a winding station; where along a transmission direction of the coil material, the winding station is disposed downstream at the unwinding station;

Herein, the winding station refers to a position where the coil material is wound into various roll packages according to certain rules in process production. For example, in battery cell production, the winding station may wind a positive electrode sheet, a separator, and a negative electrode sheet that have been slit according to a certain sequence through a fixed winding needle, and compresses them into a cylindrical, elliptical cylindrical, or square shape. The photographing position angle is an angle value of a winding turn corresponding to a photographing position determined in the winding station, where one full winding turn is 360 degrees, so the selection of the angle value shall be less than 360 degrees, such as 30 degrees and 270 degrees.

In some implementations, the photographing position at the winding station is determined by the photographing position angle. The position of the winding needle at 0 degrees may be determined first, and then a control signal is sent to the camera when the winding needle rotates to the photographing position angle to trigger the camera to capture images.

It should be noted that since the process at the winding station is performed only after the process at the unwinding station is completed, image capture by the camera at the unwinding station precedes the image capture by the camera at the winding station.

Step S3034: Determine a quotient of the photographing position angle and a circumferential angle as the weight parameter.

Herein, the circumferential angle is an angle formed when a ray rotates one full revolution around its endpoint, and its angle is equal to 360 degrees.

It should be noted that the weight parameter is determined based on the photographing position angle of the camera at the winding station. The photographing position at the unwinding station corresponding to the photographing position at the winding station may be determined based on the weight parameter, which solves the problem of positional offset between the photographing position of the camera at the unwinding station and the photographing position of the camera at the winding station.

As shown in FIG. 3B, the photographing positions at an unwinding station 12 and a winding station 13 are described. The winding station 13 includes a winding device 131; the unwinding station 12 includes a camera 3, a coil material 4, an unwinding roller 5, and a fixed roller 6. Herein, the photographing positions at the unwinding station 12 and the winding station 13 are described by taking the initial tab to tab 3 as one winding turn. On this winding turn, the photographing position determined by the photographing position angle θ_{A} at the winding station 13 is photographing position A, the photographing position determined by the photographing position angle θ_{B} is photographing position B, and an angular interval corresponding to the photographing position angle θ_{A} and the photographing position angle θ_{B} is θ_{A}-θ_{B}. In order to solve the problem of positional offset between the photographing position of the camera at the unwinding station 12 and the photographing position of the camera at the winding station, weight parameters for calculating the total accumulated pulse count are obtained respectively with the photographing position angle θ_{A} and the photographing position angle θ_{B}. Then, the photographing position A' and the photographing position B' at the unwinding station are obtained from the weight parameters corresponding to the photographing position angle θ_{A} and the photographing position angle θ_{B} respectively, where the photographing position A at the winding station corresponds to the photographing position A' at the unwinding station, and the photographing position B at the winding station corresponds to the photographing position B' at the unwinding station.

In some implementations, the distance between the cathode and the anode at the corresponding position at the unwinding station may be manually measured first to obtain a manual detection value. Then, the distance between the cathode and the anode is determined based on images acquired by the camera at the winding station and the camera at the unwinding station respectively to obtain a camera detection value. Finally, the manual detection value and the camera detection value are compared. The manual detection value is used as a reference to determine whether the camera detection value is accurate. During implementation, a difference between the manual detection value and the camera detection value is calculated. When the calculated difference is within a preset range, the camera detection value is determined to be qualified; otherwise, the camera detection value is deemed abnormal.

In some implementations, the acquisition method of the camera detection value may be as follows: first, a first distance between a coating zone and an anode may be obtained from an image acquired by the camera at the winding station, a second distance between the coating zone and a cathode may be obtained from an image acquired by the camera at the unwinding station, then the difference between the first distance and the second distance is determined as the distance between the cathode and the anode, and the obtained distance between the cathode and the anode is determined as the camera detection value.

It should be noted that if the photographing position at the winding station is inconsistent with the photographing position at the unwinding station, the first distance between the coating zone and the anode obtained from the winding station and the second distance between the coating zone and the cathode obtained from the unwinding station correspond to different positions of the winding turn. In this way, the camera detection value calculated based on the first distance and the second distance at different positions lacks reliability.

In the above embodiments, the quotient of the photographing position angle of the camera at the winding station and the circumferential angle is determined as the weight parameter, so that the total accumulated pulse count for triggering the camera to capture images of the coil material may be obtained based on the weight parameter, thereby realizing that the photographing position of the image at the unwinding station is consistent with the photographing position of the image at the winding station, and improving the reliability of the distance measurement between the cathode and the anode of the battery cell.

In some embodiments, under a condition that the battery cell to be generated is of a single-turn multi-tab type, the second detection signal is a detection signal sent by the position sensor and corresponding to a quantity of tabs of the first detection signal.

Herein, when the quantity of tabs is 2, a distance between tab 1 and tab 3 corresponds to one winding turn, and a distance between tab 3 and tab 5 corresponds to one winding turn. Correspondingly, when the first detection signal is sent upon detection of tab 1, the second detection signal may be sent upon detection of tab 3; when the first detection signal is sent upon detection of tab 3, the second detection signal may be sent upon detection of tab 5.

It should be noted that, under a condition that the battery cell to be generated is of a single-turn single-tab type, one winding turn is formed between tab 1 and tab 2, and the winding station captures images twice per full winding turn. In order to keep a quantity of photographing times at the unwinding station consistent with a quantity of photographing times at the winding station, two images may be set to be taken between tab 1 and tab 2; under a condition that the battery cell to be generated is of a single-turn multi-tab type, if the quantity of tabs is 2, one winding turn is formed between tab 1 and tab 3, and the winding station takes two images per full winding turn. In order to keep a quantity of photographing times at the unwinding station consistent with a quantity of photographing times at the winding station, it is necessary to determine that two images are taken between tab 1 and tab 3, and tab 2 needs to be filtered out to prevent two images from being taken between tab 1 and tab 2 and two images from being taken between tab 2 and tab 3.

In the above embodiments, under a condition that the battery cell to be generated is of a single-turn multi-tab type, the second detection signal is a detection signal sent by the position sensor and corresponding to a quantity of tabs of the first detection signal. As a result, under the condition that the battery cell is of a single-turn multi-tab type, the quantity of photographing times at the unwinding station is consistent with the quantity of photographing times at the winding station.

The above image acquisition method is described below with reference to one embodiment. For ease of understanding, a single-turn multi-tab is taken as an example to introduce a possible flow applicable to the embodiments of the present disclosure. However, it is worth noting that this embodiment merely serves to elaborate the present disclosure and does not constitute an improper limitation on the present disclosure.

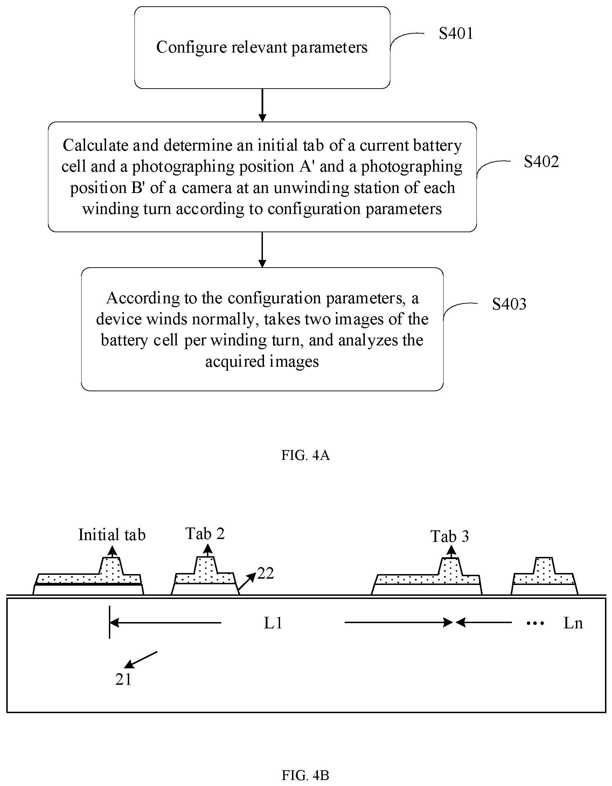

As shown in FIG. 4A, an image acquisition method for a single-turn multi-tab is provided and may include step S401 to step S403:

Step S401: Configure relevant parameters.

Herein, the relevant parameters may include a follower roller diameter Ø, a quantity of pulses n₀ generated by an encoder when the follower roller rotates one revolution, a length L₀ of a photoelectric sensor from a camera in a coil material transport direction, an angle θ_{A} corresponding to a photographing position A of a camera at a winding station, and an angle θ_{B} corresponding to a photographing position B of the camera at the winding station.

Accordingly, based on the above parameters, a winding length formula of the coil material may be obtained: $L = \left(π⋅∅⋅n\right) / {n}_{0}$ (1); where Ø denotes a diameter of the follower roller on which the encoder is mounted, n is a pulse count of the encoder, and n₀ is a quantity of pulses generated by the encoder when the follower roller rotates one revolution.

Step S402: Calculate and determine an initial tab of a current battery cell and a photographing position A' and a photographing position B' of a camera at an unwinding station of each winding turn according to configuration parameters.

In the process of producing a battery cell, as the winding device winds the coil material, a quantity of winding layers increases gradually, and the winding length of each winding turn also increases synchronously. The initial tab is the first tab of the battery cell to be generated and is located in the innermost layer of the winding layers. From the above description, the winding turn corresponding to the initial tab is the innermost turn of the battery cell to be generated, so its winding length is the smallest. Therefore, it is only necessary to determine the innermost turn, and the first tab on the innermost turn is the initial tab.

During implementation, first, a section of coating material is wound singly, then a quantity of pulses sent by the encoder between two adjacent odd-indexed pulse signals of the photoelectric sensor is obtained, the tab span between adjacent odd-indexed tabs is calculated through formula (1), and compared with a preset inner turn length. When the tab span is equal to the inner turn length, the initial tab of the current battery cell to be generated may be determined.

It should be noted that most battery cells currently on the market are of a single-turn single-tab type. The winding length of a winding turn refers to the distance between two adjacent tabs, which may also be called a tab span. However, the embodiments of the present disclosure are described by taking a single-turn multi-tab as an example. As shown in FIG. 4B, a schematic diagram of tab positions on a coil material is shown, including an electrode sheet area 21 and an AT area 22. Herein, the initial tab to tab 3 is taken as one winding turn for description. Since the winding turn includes the initial tab, tab 2, and tab 3, when calculating the winding length of the winding turn, even-indexed tabs, that is, tab 2, need to be filtered out first, and the distance between adjacent odd-indexed tabs is regarded as one winding turn, that is, L1 is one winding turn length.

After the initial tab of the current battery cell to be generated is determined, it is also necessary to confirm the photographing position A' and the photographing position B' of the camera at the unwinding station for each winding turn.

During implementation, first, every time the PLC receives two adjacent odd-indexed pulse signals from the photoelectric sensor, it determines the total number N of pulse signals transmitted by the encoder between the adjacent odd-indexed pulse signals, and then calculates the winding length between adjacent odd-indexed tabs through formula (1) as: ${L}_{n} = \left(π⋅∅⋅N\right) / {n}_{0}$ (2);

Through formula (2) and the angle θ_{A} corresponding to the photographing position A of the camera at the winding station, the length of the photographing position A at the winding station in the current winding turn, that is, the length between the photographing position of the camera and the initial tab of the current winding turn, may be obtained: ${L}_{n} \times {θ}_{A} / 2 π$ (3);

Further, the length of the photoelectric sensor from the camera in the coil material transport direction plus L₀, plus the length between the photographing position of the camera and the initial tab of the current winding turn, and then minus the winding length between the adjacent odd-indexed tabs that have passed, the photographing position A' of the camera at the unwinding station may be obtained.

Corresponding to the photographing position A of the camera at the winding station, the photographing position A' of the camera at the unwinding station is: ${L}_{0} + {L}_{n} \times \left({θ}_{A}/2π-1\right)$ (4);

Similarly, corresponding to the photographing position B of the camera at the winding station, the photographing position B' of the camera at the unwinding station is: ${L}_{0} + {L}_{n} \times \left({θ}_{B}/2π-1\right)$ (5);

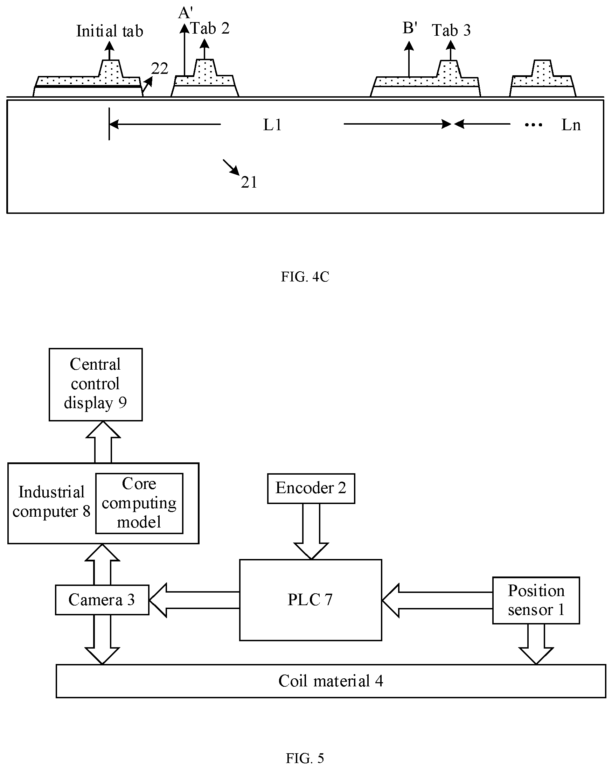

As shown in FIG. 4C, the tab is a protruding boss-shaped structure in the shaded part. The distance L1 between the initial tab and tab 3 is one winding turn. Taking the initial tab as an example, the width of the coating zone corresponding to the initial tab region and the coating zone corresponding to the non-tab region are different. Generally, the width of the tab region is 30-40 mm. In the battery production process, when image acquisition is performed on the coating zone, the accuracy requirements for camera photographing are high, and the corresponding field of view of the camera will be reduced. Generally, the field of view of a camera is 20-30 mm. It may be seen that the tab region is larger relative to the field of view of the camera. If the tab region is not avoided, the photos taken by the camera may all be of the tab region. The electrode sheets in the tab region differ from the electrode sheets in the non-tab region. If the tab region is not avoided, it will affect the positional offset inspection of the coating zone. Taking the initial tab to tab 3 as one winding turn for description, the photographing position A' and the photographing position B' at the unwinding station in this winding turn determined by formula (3) and formula (4) may be seen to avoid the tab region.

Step S403: According to the configuration parameters, the device winds normally, takes two images of the battery cell per winding turn, and analyzes the acquired images.

From the above step S402, it may be known that the photographing position at the unwinding station is determined based on the photographing position angle at the winding position. Therefore, the photographing position of the camera at the unwinding station determined by formula (3) and formula (4) is relatively consistent with the photographing position at the winding station.

Herein, the camera at the unwinding station acquires an image at the photographing position at the unwinding station determined by formula (4) or formula (5), and the camera at the winding station acquires an image at the photographing position at the winding station determined by formula (3).

The first distance between the coating zone and the anode may be measured from the picture acquired by the camera at the winding station, and the second distance between the coating zone and the cathode may be obtained from the picture acquired by the camera at the unwinding station. Then, the distance between the cathode and the anode is determined based on the difference between the first distance and the second distance.

Further, the distance between the cathode and the anode determined based on the acquired image is compared with the distance between the cathode and the anode obtained by manual measurement, and the manual measurement value is used as a reference to determine whether the distance between the cathode and the anode determined by the acquired image is accurate.

During implementation, the difference between the manual detection value and the camera detection value may be determined first. If the difference is within a preset range, the camera detection value is determined to be normal; otherwise, the camera detection value is deemed abnormal. Among them, the distance between the cathode and the anode determined by the acquired image is the camera detection value, and the distance between the cathode and the anode obtained by manual measurement is referred to as the manual detection value.

It should be noted that the position sensor in the foregoing embodiments may be implemented as the above-mentioned photoelectric sensor respectively; the unwinding roller is implemented as the above-mentioned follower roller.

In the embodiments of the present disclosure, an image acquisition method is provided, which may identify tabs through a photoelectric sensor. The winding length may be automatically calculated according to the signal fed back by the encoder, which may adapt to different winding speeds, realize image acquisition and size detection at specified positions avoiding the tab region, may accurately locate regions with dimensional defects, and improve the reliability of OH (distance between the cathode and the anode of the battery cell) detection. Based on the embodiments of the present disclosure, the following beneficial effects may be obtained:
(1). The influence of winding speed on image acquisition may be eliminated, and the photographing interval may be automatically adjusted, so that the photographing position at the unwinding station corresponds to the photographing position at the winding station, realizing image acquisition and target size detection of a specified film area position avoiding the tab region, so as to improve the reliability of OH measurement.
(2). Screening of odd/even tabs of single-turn multi-tab coating materials may be performed to realize two shots per single turn of the current battery cell to match the quantity of photographing times of the camera at the winding station.

The embodiments of the present disclosure are described by taking a PLC as an example. As shown in FIG. 5, an image acquisition system applied to an unwinding station includes an encoder 2, a position sensor 1, a camera 3, and a PLC 7; where
the encoder 2 is configured to transmit pulse signals when an unwinding roller moves.

Herein, the encoder sends a pulse signal to the PLC when the unwinding roller moves.

The position sensor 1 is configured to send a first detection signal to the PLC upon detecting a tab on a coil material.

Herein, the position sensor detects a tab on the coil material by continuously sending pulse signals to the coil material.

The camera 3 is configured to capture images of the coil material after receiving a photographing signal sent by the PLC.

Herein, after photographing the coil material, the camera also sends the acquired image to an industrial computer.

The PLC 7 is configured to receive a first detection signal sent by the position sensor upon detecting a tab on a coil material; acquire a first pulse count obtained from pulses transmitted by an encoder disposed on an unwinding roller within a time interval between the first detection signal and a second detection signal; where the second detection signal is a detection signal sent by the position sensor and temporally adjacent to the first detection signal; determine a total accumulated pulse count for triggering a camera to capture images based on the first pulse count, a preset weight parameter, and a first distance pulse count; where the weight parameter is used to characterize relative positional information between a position at which the coil material is photographed and an initial tab on a winding turn in which a current tab is located; the first distance pulse count is used to characterize a distance between the camera and the position sensor; and trigger the camera to capture images of the coil material based on the total accumulated pulse count.

In some embodiments, the PLC 7 is further configured to determine a first pulse sequence number corresponding to pulses transmitted by the encoder when the first detection signal is sent; acquire a second pulse sequence number corresponding to pulses transmitted by the encoder when the second detection signal is sent; and determine a pulse count between the first pulse sequence number and the second pulse sequence number as the first pulse count.

In some embodiments, the PLC 7 is further configured to take a product of the first pulse count and the weight parameter as a second pulse count; the second pulse count is a pulse count corresponding to a distance between a next photographing position of the camera and an initial tab on a winding turn in which a current tab is located; take a difference between the second pulse count and the first pulse count as a third pulse count; where the third pulse count is a pulse count corresponding to a distance between the position sensor and the next photographing position; and determine a sum of the first distance pulse count and the third pulse count as the total accumulated pulse count for triggering the camera to capture images.

In some embodiments, the PLC 7 is further configured to determine a tab span between two adjacent tabs in a battery cell to be generated based on the first pulse count obtained from pulses transmitted by the encoder, a circumference of the unwinding roller, and a second distance pulse count; where the second distance pulse count is a quantity of pulse signals generated by the encoder when the unwinding roller rotates one revolution; and the tab span is used to control the camera to photograph the battery cell to be generated.

In some embodiments, the image acquisition system applied to the unwinding station further includes an industrial computer 8 and a central control display 9, where
the industrial computer 8, as a visual host computer, is an image processing terminal, on which there is a core computing model for analyzing images acquired by the camera 3.

Herein, the industrial computer sends the analysis result to the central control display 9.

The central control display 9 is configured to display the processing result output by the industrial computer 8.

It should be noted herein that the above descriptions of the various embodiments tend to emphasize the differences between the various embodiments, and the same or similar points may be understood with reference to one another. The descriptions of the above device, storage medium, computer program, and computer program product embodiments are similar to the descriptions of the above method embodiments and have similar beneficial effects to the method embodiments. For technical details not disclosed in the device, storage medium, computer program, and computer program product embodiments of the present disclosure, please refer to the description of the method embodiments of the present disclosure for understanding.

It should be understood that "one embodiment" or "an embodiment" mentioned throughout the specification means that a specific feature, structure, or characteristic related to the embodiment is included in at least one embodiment of the present disclosure. Therefore, "in one embodiment" or "in an embodiment" appearing in various places throughout the specification does not necessarily refer to the same embodiment. In addition, these specific features, structures, or characteristics may be combined in one or more embodiments in any suitable manner. It should be understood that in various embodiments of the present disclosure, the sequence numbers of the above steps/processes do not indicate the order of execution. The execution order of each step/process should be determined by its function and internal logic, and should not constitute any limitation on the implementation process of the embodiments of the present disclosure. The above sequence numbers of the embodiments of the present disclosure are only for description and do not represent the superiority or inferiority of the embodiments.

It should be noted that, in this document, the terms "include", "comprise", or any other variants thereof are intended to cover non-exclusive inclusion, so that a process, method, article, or device including a series of elements includes not only those elements but also other elements not explicitly listed, or also includes elements inherent to such process, method, article, or device. In the absence of more restrictions, an element defined by the statement "includes a ......" does not exclude the existence of other identical elements in the process, method, article, or device that includes the element.

In the several embodiments provided in the present disclosure, it should be understood that the disclosed devices and methods may be implemented in other ways. The device embodiments described above are only schematic. For example, the division of units is only a logical function division. In actual implementation, there may be other division methods, such as: multiple units or components may be combined, or may be integrated into another system, or some features may be ignored or not executed. In addition, the coupling, direct coupling, or communication connection between the components shown or discussed may be through some interfaces, and the indirect coupling or communication connection of devices or units may be electrical, mechanical, or in other forms.

The units described above as separate components may or may not be physically separate, and the components displayed as units may or may not be physical units; they may be located in one place or distributed to multiple network units; some or all of the units may be selected according to actual needs to achieve the purpose of the solutions of this embodiment.

In addition, each functional unit in each embodiment of the present disclosure may be integrated into one processing unit, or each unit may exist alone as a unit, or two or more units may be integrated into one unit; and the integrated unit may be implemented in the form of hardware or in the form of hardware plus software functional units.

Those of ordinary skill in the art may understand that all or part of the steps to implement the foregoing method embodiments may be completed by hardware related to program instructions. The aforementioned program may be stored in a computer-readable storage medium. When the program is executed, it executes the steps including the above method embodiments; and the storage medium includes various media that may store program codes, such as mobile storage devices, read-only memory (Read Only Memory, ROM), magnetic disks, or optical disks.

Alternatively, if the integrated unit of the present disclosure is implemented in the form of a software function module and sold or used as an independent product, it may also be stored in a computer-readable storage medium. Based on such understanding, the technical solution of the present disclosure essentially or the part that contributes to the related art may be embodied in the form of a software product. The computer software product is stored in a storage medium and includes several instructions to enable a computer device (which may be a personal computer, a server, a network device, or the like) to execute all or part of the methods of each embodiment of the present disclosure. The storage medium includes various media that may store program codes, such as mobile storage devices, ROM, magnetic disks, or optical disks.

The above are merely the implementation modes of the present disclosure, but the protection scope of the present disclosure is not limited thereto. Any person skilled in the art may easily think of changes or replacements within the technical scope disclosed in the present disclosure, which should be covered by the protection scope of the present disclosure.

## Claims

1. An image acquisition method, wherein the method comprises:
receiving a first detection signal sent by a position sensor upon detecting a tab on a coil material;
acquiring a first pulse count obtained from pulses transmitted by an encoder disposed on an unwinding roller within a time interval between the first detection signal and a second detection signal; wherein the second detection signal is a detection signal sent by the position sensor and temporally adjacent to the first detection signal;
determining a total accumulated pulse count for triggering a camera to capture images based on the first pulse count, a preset weight parameter, and a first distance pulse count;
wherein the weight parameter is used to characterize relative positional information between a position at which the coil material is photographed and an initial tab on a winding turn in which a current tab is located; the first distance pulse count is used to characterize a distance between the camera and the position sensor; and
triggering the camera to capture images of the coil material based on the total accumulated pulse count.

2. The method according to claim 1, wherein the acquiring a first pulse count obtained from pulses transmitted by an encoder disposed on an unwinding roller within a time interval between the first detection signal and a second detection signal comprises:
determining a first pulse sequence number corresponding to pulses transmitted by the encoder when the first detection signal is sent;
acquiring a second pulse sequence number corresponding to pulses transmitted by the encoder when the second detection signal is sent; and
determining a pulse count between the first pulse sequence number and the second pulse sequence number as the first pulse count.

3. The method according to claim 2, wherein the method further comprises:
establishing a mapping relationship between the first detection signal and the first pulse sequence number, and storing the mapping relationship in a storage region in an image acquisition system at an unwinding station.

4. The method according to any one of claims 1 to 3, wherein the determining a total accumulated pulse count for triggering a camera to capture images based on the first pulse count, a preset weight parameter, and a first distance pulse count comprises:
taking a product of the first pulse count and the weight parameter as a second pulse count; wherein the second pulse count is a pulse count corresponding to a distance between a next photographing position of the camera and an initial tab on a winding turn in which a current tab is located;
taking a difference between the second pulse count and the first pulse count as a third pulse count; wherein the third pulse count is a pulse count corresponding to a distance between the position sensor and the next photographing position; and
determining a sum of the first distance pulse count and the third pulse count as the total accumulated pulse count for triggering the camera to capture images.

5. The method according to any one of claims 1 to 4, wherein the method further comprises:
determining a tab span between two adjacent tabs in a battery cell to be generated based on the first pulse count obtained from pulses transmitted by the encoder, a circumference of the unwinding roller, and a second distance pulse count;
wherein the second distance pulse count is a quantity of pulse signals generated by the encoder when the unwinding roller rotates one revolution; and the tab span is used to control the camera to photograph the battery cell to be generated.

6. The method according to any one of claims 1 to 5, wherein the first distance pulse count is greater than S times a first pulse count threshold, the first pulse count threshold is a pulse count corresponding to a tab span between an initial tab and an adjacent next tab, and S is a real number greater than 1.

7. The method according to any one of claims 1 to 6, wherein the method further comprises:
acquiring a photographing position angle of a camera at a winding station; wherein the winding station is disposed downstream at the unwinding station along a transmission direction of the coil material; and
determining a quotient of the photographing position angle and a circumferential angle as the weight parameter.

8. The method according to any one of claims 1 to 7, wherein under a condition that a battery cell to be generated is of a single-turn multi-tab type, the second detection signal is a detection signal sent by the position sensor and corresponding to a quantity of tabs of the first detection signal.

9. An image acquisition system applied to an unwinding station, wherein the image acquisition system comprises an encoder, a position sensor, a camera, and an image acquisition controller; wherein
the encoder is configured to transmit pulse signals when an unwinding roller moves;
the position sensor is configured to send a first detection signal to the image acquisition controller upon detecting a tab on a coil material;
the camera is configured to capture images of the coil material after receiving a photographing signal sent by the image acquisition controller; and
the image acquisition controller is configured to receive a first detection signal sent by the position sensor upon detecting a tab on a coil material; acquire a first pulse count obtained from pulses transmitted by an encoder disposed on an unwinding roller within a time interval between the first detection signal and a second detection signal; wherein the second detection signal is a detection signal sent by the position sensor and temporally adjacent to the first detection signal; determine a total accumulated pulse count for triggering a camera to capture images based on the first pulse count, a preset weight parameter, and a first distance pulse count; wherein the weight parameter is used to characterize relative positional information between a position at which the coil material is photographed and an initial tab on a winding turn in which a current tab is located; and the first distance pulse count is used to characterize a distance between the camera and the position sensor; and trigger the camera to capture images of the coil material based on the total accumulated pulse count.

10. The image acquisition system applied to an unwinding station according to claim 9, wherein
the image acquisition controller is further configured to determine a first pulse sequence number corresponding to pulses transmitted by the encoder when the first detection signal is sent; acquire a second pulse sequence number corresponding to pulses transmitted by the encoder when the second detection signal is sent; and determine a pulse count between the first pulse sequence number and the second pulse sequence number as the first pulse count.

11. The image acquisition system applied to an unwinding station according to claim 10, wherein
the image acquisition controller is further configured to establish a mapping relationship between the first detection signal and the first pulse sequence number and store the mapping relationship in a storage region in an image acquisition system at an unwinding station.

12. The image acquisition system applied to an unwinding station according to any one of claims 9 to 11, wherein
the image acquisition controller is further configured to take a product of the first pulse count and the weight parameter as a second pulse count; the second pulse count is a pulse count corresponding to a distance between a next photographing position of the camera and an initial tab on a winding turn in which a current tab is located; take a difference between the second pulse count and the first pulse count as a third pulse count; wherein the third pulse count is a pulse count corresponding to a distance between the position sensor and the next photographing position; and determine a sum of the first distance pulse count and the third pulse count as the total accumulated pulse count for triggering the camera to capture images.

13. The image acquisition system applied to an unwinding station according to any one of claims 9 to 12, wherein
the image acquisition controller is further configured to determine a tab span between two adjacent tabs in a battery cell to be generated based on the first pulse count obtained from pulses transmitted by the encoder, a circumference of the unwinding roller, and a second distance pulse count; wherein the second distance pulse count is a quantity of pulse signals generated by the encoder when the unwinding roller rotates one revolution; and the tab span is used to control the camera to photograph the battery cell to be generated.

14. The image acquisition system applied to an unwinding station according to any one of claims 9 to 13, wherein the first distance pulse count is greater than S times a first pulse count threshold, the first pulse count threshold is a pulse count corresponding to a tab span between an initial tab and an adjacent next tab, and S is a real number greater than 1.

15. The image acquisition system applied to an unwinding station according to any one of claims 9 to 14, wherein
the image acquisition controller is further configured to acquire a photographing position angle of a camera at a winding station; wherein the winding station is disposed downstream at the unwinding station along a transmission direction of the coil material; and determine a quotient of the photographing position angle and a circumferential angle as the weight parameter.

16. The image acquisition system applied to an unwinding station according to any one of claims 9 to 15, wherein under a condition that a battery cell to be generated is of a single-turn multi-tab type, the second detection signal is a detection signal sent by the position sensor and corresponding to a quantity of tabs of the first detection signal.
